# EUROPÄISCHE PATENTSCHRIFT

(11) **EP 1 648 845 B1**
(45) Veröffentlichungstag und Bekanntmachung des Hinweises auf die Patenterteilung: **14.05.2008**
(21) Anmeldenummer: 04740602.0
(22) Anmeldetag: 03.07.2004
(51) Int. Cl.: C07B 63/00

(54) **VERFAHREN ZUR EXTRAKTION VON VERUNREINIGUNGEN MIT IONISCHEN FLÜSSIGKEITEN**
METHOD FOR EXTRACTING IMPURITIES USING IONIC LIQUIDS
PROCEDE POUR EXTRAIRE DES IMPURETES AU MOYEN DE LIQUIDES IONIQUES

(30) Priorität: 21.07.2003 DE 10333258
(43) Veröffentlichungstag der Anmeldung: 26.04.2006
(73) Patentinhaber: BASF SE, 67056 Ludwigshafen (DE)
(72) Erfinder: MAASE, Matthias, 67346 Speyer (DE); BUDICH, Manuel, 67459 Böhl-Iggelheim (DE); GROSSMANN, Georg, 68199 Mannheim (DE); SZARVAS, Laszlo, 67071 Ludwigshafen (DE)
(86) Internationale Anmeldenummer: PCT/EP2004/007254
(87) Internationale Veröffentlichungsnummer: WO 2005/019137

(56) Entgegenhaltungen:
- EP-A- 1 310 543
- EP-A- 1 354 863
- WO-A-02/34863
- HUDDLESTON J G ET AL: "ROOM TEMPERATURE IONIC LIQUIDS AS NOVEL MEDIA FOR CLEAN LIQUID LIQUID EXTRACTION" CHEMICAL COMMUNICATIONS - CHEMCOM, ROYAL SOCIETY OF CHEMISTRY, GB, 1998, Seiten 1765-1766, XP002926442 ISSN: 1359-7345
- ANN E. VISSER ET AL.: "pH-dependent partitioning in room temperature ionic liquids" GREEN CHEMISTRY, Februar 2000 (2000-02), Seiten 1-4, XP002304574
- BEKOU, EVANGELIA ET AL.: "Extraction of chlorophenols from water using room temperature ionic liquids" September 2003 (2003-09), OXFORD UNIVERSITY PRESS , XP008037509 das ganze Dokument

## Beschreibung

Die Erfindung betrifft ein Verfahren zur extraktiven Entfernung von Phenolen, Alkoholen, Aminen, Phoshinen, Hydroxylaminen, Hydrazinen, Oximen, Iminen, Carbonsäuren, Aminosäuren, Hydroxamsäuren, Sulfinsäuren, Sulfonsäuren, Peroxycarbonsäuren, Phosphonige Säuren, Phosphinige Säuren, Phosphonsäuren, Phosphinsäuren oder Phosphorsäuren aus apotischen Lösungsmitteln mit Hilfe von ionischen Flüssigkeiten der Formel [K]ₙ⁺[A]ⁿ⁻,
wobei
- n: 1, 2 oder 3 ist;
- [K]+: ausgewählt ist aus der Gruppe bestehend aus:
- quartären Ammonium-Kationen der allgemeinen Formel [NR¹, R²,R³,R⁴]⁺ (Ia),
- quartären Phosphonium-Kationen der allgemeinen Formel [PR¹, R²,R³,R⁴]⁺ (Ib),
   in denen
   R¹, R², R³, R⁴ C₁-C₁₂-Alkyl oder Phenyl-C₁-C₄-alkyl bedeuten, wobei die alphatischen Reste 1 bis 4 Substituenten ausgewählt aus der Gruppe Halogen, Amino, Cyan, C₁-C₄-Alkoxy tragen können und der Phenylring die zuvorgenannten Substituenten und zusätzlich C₁-C₆-alkyl, Carboxylat- und Sulfonatgruppierungen tragen kann;
   R¹ und R² zusammen für einen C₄-C₅-Alkenylenrest, der durch C₁-C₄-Alkyl, Halogen, Cyan oder C₁-C₄-Alkoxy substituiert sein kann, stehen können;
- Imidazolium-Kationen der allgemeinen Formel, 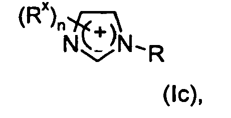
- Pyridinium-Kationen der allgemeinen Formel, 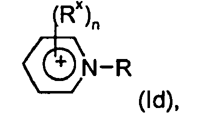
- Pyrazolium-Kationen der allgemeinen Formel, 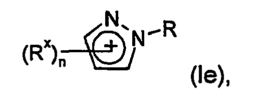
- Chinolinium-Kationen der allgemeinen Formel, 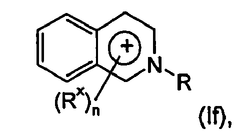
- Thiazolium-Kationen der allgemeinen Formel, 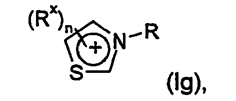
- Triazinium-Kationen der allgemeinen Formel, 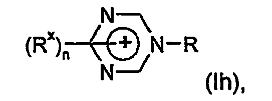 in denen der Index n und die Substituenten R und R^{x} die folgende Bedeutung haben:
   n 0, 1, 2, 3 oder 4;
   R Wasserstoff, C₁-C₁₂-Alkyl oder Phenyl-C₁-C₄-alkyl,
   wobei die alphatischen Reste 1 bis 4 Substituenten ausgewählt aus der Gruppe Halogen, Amino, Cyan, C₁-C₄-Alkoxy tragen können und der Phenylring die zuvorgenannten Substituenten und zusätzlich C₁-C₆-alkyl, Carboxylat- und Sulfonatgruppierungen tragen kann;
   R^{x} C₁-C₆-Alkyl, Halogen, Amino, Cyan, C₁-C₄-Alkoxy, Carboxylat oder Sulfonat;
- [A]ⁿ⁻: für das teil- oder volldeprotonierte Anion einer anorganischen oder organischen Protonensäure HₙA (III) steht, wobei n eine ganze, positive Zahl ist und den Ladungszustand des Anions wiedergibt,

lonische Flüssigkeiten sind ein recht junges Forschungsgebiet. Im allgemeinen versteht man unter ionischen Flüssigkeiten Salze, die einen Schmelzpunkt unter 100 °C haben. Ein derart weitgefasster Begriff umfasst auch ionische Flüssigkeiten auf Basis von Metallhalogeniden wie Aluminuium-, Zink- oder Kupferchlorid.

Für das vorliegende Extraktionsverfahren sind ionische Flüssigkeiten auf Basis von Metallhalogeniden, wie sie beispielsweise in der WO 01/40150 beschrieben werden, nicht geeignet, da sie mit der protischen, funktionellen Gruppierung des zu extrahierenden Moleküls reagieren würden.

Für die vorliegende Erfindung wurden deshalb die ionischen Flüssigkeiten wie eingangs erwähnt enger definiert.

Extraktionen von Schwefelverunreinigungen aus Kraftstoffen sind in der Literatur (WO 01/40150, DE 101 55 281) mit den eingangs erwähnten ionischen Flüssigkeiten bereits beschrieben. Die zitierten Arbeiten gingen davon aus, dass es sich bei Schwefelverunreinigungen um leicht polarisierbare Verbindungen handelt, während Alkane (Kraftstoffe) schwer polarisierbare Verbindungen sind.

EP-A-1 310 543 offenbart ein Verfahren zur Trocknung eines Gasshomes eines Kohlenwasserstoffs.

Völlig überraschend wurde nun gefunden, dass auch Verbindungen mit protischen Gruppen sich aus Kohlenwasserstoffen extrahieren lassen. Das Verfahren liefert nicht nur bei Extraktionen aus Alkanen gute Ergebnisse, sondern lässt sich erstaunlicherweise auf Extraktionen aus aromatischen Kohlenwasserstoffen ausdehnen. Die Beispiele zeigen eindrucksvoll, dass Kresol, das eine (protische) OH- Gruppe aufweist, aus dem aromatischen Kohlenwasserstoff Chlorbenzol effizient extrahiert werden kann.

Ionische Flüssigkeiten lassen sich beispielsweise wie in der Monographie P. Wasserscheid und T. Welton "Ionic liquids in synthesis", Wiley-VCH 2003 dargelegt durch Alkylierung und/oder Anionenaustausch herstellen.

Unter ionischen Flüsssigkeiten sind die eingangs definierten Salze zu verstehen. Im folgenden werden die ionischen Flüssigkeiten insbesondere auf die Ausgestaltung des Anions näher beschrieben.

Bevorzugt werden als Kation Ammoniumsalze (1a) oder 1,3-substituierte Imidazoliumsalze (Ic) eingesetzt. Ganz besonders bevorzugt sind Imidazoliumsalze (Ic), welche als 1,3-substituiertes Imidazoliumkation 1,3-Dimethylimdazolium, 1-Ethyl-3-methylimidazolium, 1-Methyl-3-propylimidazolium, 1-Isopropyl-3-methylimidazolium, 1-Butyl-3-methylimidazolium, 1-Methyl-3-pentylimidazolium, 1-Hexyl-3-methylimidazolium, 1-Heptyl-3-methylimidazolium, 1-Methyl-3-octylimidazolium, 1-Decyl-3-methylimidazolium, 1-Methyl-3-benzylimidazolium, 1-Methyl-3-(3-phenylpropyl)imidazolium, 1-(2-Ethyl)hexyl-3-methylimidazolium, 1-Methyl-3-nonylimidazolium, 1-Methyl-3-decylimidazolium, 1,2,3 Trimethylimidazolium, 1-Ethyl-2,3-dimethylimidazolium oder 1-Butyl-2,3-dimethylimidazolium enthalten.

Die im erfindungsgemäßen Verfahren verwendeten ionischen Flüssigkeiten enthalten ein Anion Aⁿ⁻, wobei dieses für das teil- oder volldeprotonierte Anion einer anorganischen oder organischen Protonensäure HₙA (III) steht, wobei n eine ganze, positive Zahl ist und den Ladungszustand des Anions wiedergibt.

Als teildeprotoniertes Anion ist ein Anion aus einer mehrwertigen Säure zu verstehen, welches noch ein oder mehrere deprotonierbare Wasserstoffatome enthält. Entsprechend ist als volldeprotoniertes Anion ein Anion zu verstehen, welches keine weiteren deprotonierbaren Wasserstoffatome enthält.

### Bevorzugte Anionen Aⁿ⁻ sind:

Fluorid; Hexafluorophosphat; Hexafluoroarsenat; Hexafluoroantimonat; Trifluoroarsenat; Nitrit; Nitrat; Sulfat; Hydrogensulfat; Carbonat; Hydrogencarbonat; Phosphat; Hydrogenphosphat; Dihydrogenphosphat, Vinylphosphonat, Dicyanamid, Bis(pentafluoroethyl)phosphinat, Tris(pentafluoroethyl)trifluoro-phosphat, Tris(heptafluoropropyl)trifluorophosphat, Bis[oxalato(2-)]borat, Bis[salicylato(2-)]borat, Bis[1,2-benzoldiolato(2-)-O,O']borat, Tetracyanoborat;
tetrasubstituiertes Borat der allgemeinen Formel (IIa) [BR^{a}R^{b}R^{c}R^{d}]⁻, wobei R^{a} bis R^{d} unabhängig voneinander für Fluor oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
organisches Sulfonat der allgemeinen Formel (IIb) [R^{e}-SO₃]⁻, wobei R^{e} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;

Carboxylat der allgemeinen Formel (IIc) [R^{f}-COO]⁻, wobei R^{f} für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;
(Fluoralkyl)fluorphosphat der allgemeinen Formel (IId) [PFₓ(C_{2y+1-z}H_{z})₆₋ₓ]⁻, wobei 1≤x≤6, 1≤y≤8 und 0≤z≤2y+1;
Imid der allgemeinen Formeln (IIe) [R^{g}-SO₂-N-SO₂-R^{h}]⁻, (IIf) [Rⁱ-SO₂-N-CO-R^{j}]⁻ oder (IIg) [R^{k}-CO-N-CO-R^{l}]⁻, wobei R^{g} bis R^{l} unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;

Methid der allgemeinen Formel (IIh) 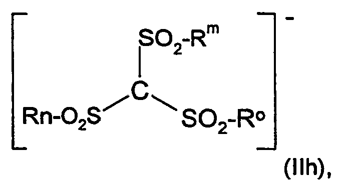 wobei R^{m} bis R^{o} unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;
organisches Sulfat der allgemeinen Formel (IIi) [R^{p}O-SO₃]⁻, wobei R^{p} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht;

Die Ladung "n-" des Anions Aⁿ⁻ beträgt "1-", "2-" oder "3-". Als Beispiele zweifach negativ geladener Anionen seien Sulfat, Hydrogenphosphat und Carbonat genannt. Als Beispiel eines dreifach negativ geladenen Anions sei Phosphat genannt.

Als Heteroatome kommen prinzipiell alle Heteroatome in Frage, welche in der Lage sind, formell eine -CH₂-, eine -CH=, eine C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR-, -N=, -PR-, -PR₂ und -SiR₂- genannt, wobei es sich bei den Resten R um den verbleibenden Teil des Kohlenstoff enthaltenden Rests handelt.

Als funktionelle Gruppen kommen prinzipiell alle funktionellen Gruppen in Frage, welche an ein Kohlenstoffatom oder ein Heteroatom gebunden sein können. Als geeignete Beispiele seien -OH (Hydroxy), =O (insbesondere als Carbonylgruppe), -NH₂ (Amino), =NH (Imino), -COOH (Carboxy), -CONH₂ (Carboxamid) und -CN (Cyano) genannt. Fuktionelle Gruppen und Heteroatome können auch direkt benachbart sein, so dass auch Kombinationen aus mehreren benachbarten Atomen, wie etwa -O- (Ether), -S-(Thioether), -COO- (Ester), -CONH- (sekundäres Amid) oder -CONR- (tertiäres Amid), mit umfasst sind,

Als Kohlenstoff enthaltende organische, gesättigte oder ungesättigte, acyclische oder cyclische, aliphatische, aromatische oder araliphatische Reste mit 1 bis 30 Kohlenstoffatomen stehen die Reste R^{a} bis R^{d} beim tetrasubstituiertes Borat (IIa), der Rest R^{e} beim organischen Sulfonat (IIb), der Rest R^{f} beim Carboxylat (IIc) und die Reste R^{g} bis R^{l} bei den Imiden (IIe), (IIf) und (IIg) unabhängig voneinander bevorzugt für
- C₁- bis C₃₀-Alkyl und deren aryl-, heteroaryl-, cycloalkyl-, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(1-b)}H_{2a+b} mit n ≤ 30, 0 ≤ a ≤ n und b = 0 oder 1 (beispielsweise CF₃, C₂F₅, CH₂CH₂-C₍ₙ₋₂₎F_{2(n-2)+1,} C₆F₁₃, C₈F₁₇, C₁₀F₂₁, C₁₂F₂₅);
- C₃- bis C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder CₙF_{2(n-a)-(1-b)}H_{2a-b} mit n ≤ 30, 0 ≤ a ≤ n und b = 0 oder 1;
- C₂- bis C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder CₙF_{2(n-a)-(1-b)}H_{2a-b} mit n ≤ 30, 0 ≤ a ≤ n und b = 0 oder 1;
- C₃- bis C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder CₙF_{2(n-a)-3(1-b)}H_{2a-3b} mit n ≤ 30, 0 ≤ a ≤ n und b = 0 oder 1; und
- Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5.

Handelt es sich bei dem Anion Aⁿ⁻ um ein tetrasubstituiertes Borat (IIa) [BR^{a}R^{b}R^{c}R^{d}]⁻, so sind bei diesem bevorzugt alle vier Reste R^{a} bis R^{d} identisch, wobei diese bevorzugt für Fluor, Trifluormethyl, Pentafluorethyl, Phenyl, 3,5-Bis(trifluormethyl)phenyl stehen. Besonders bevorzugte tetrasubstituierte Borate (IIa) sind Tetrafluoroborat, Tetraphenylborat und Tetra[3,5-bis(trifluormethyl)phenyl]borat.

Handelt es sich bei dem Anion Aⁿ⁻ um ein organisches Sulfonat (IIb) [R^{e}-SO₃]⁻, so steht der Rest R^{e} bevorzugt für Methyl, Trifluormethyl, Pentafluorethyl, p-Tolyl oder C₉F₁₉. Besonders bevorzugte organische Sulfonate (IIb) sind Trifluonnethansulfonat (Triflat), Methansulfonat, p-Tolylsulfonat, Nonadecafluorononansulfonat (Nonaflat), Dimethylenglykolmonomethyl-ethersulfat und Octylsulfat.

Handelt es sich bei dem Anion Aⁿ⁻ um ein Carboxylat (IIc) [R^{f}-COO]⁻, so steht der Rest R^{f} bevorzugt für Wasserstoff, Trifluormethyl, Pentafluorethyl, Phenyl, Hydroxy-phenylmethyl, Trichlormethyl, Dichlormethyl, Chlormethyl, Trifluormethyl, Difluormethyl, Fluormethyl, Ethenyl (Vinyl), 2-Propenyl, -CH=CH-COO⁻, cis-8-Heptadecenyl, -CH₂-C(OH)(COOH)-CH₂-COO⁻ oder unverzweigtes oder verzweigtes C₁- bis C₁₈-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Heptadecyl. Besonders bevorzugte Carboxylate (Vc) sind Formiat, Acetat, Propionat, Butyrat, Valeriat, Benzoat, Mandelat, Trichloracetat, Dichloracetat, Chloracetat, Trifluoracetat, Difluoracetat, Fluoracetat.

Handelt es sich bei dem Anion Aⁿ⁻ um ein (Fluoralkyl)fluorphosphat (IId) [PFₓ(C_{y}F_{2y+1-z}H_{z})₆₋ₓ]⁻, so ist z bevorzugt 0. Besonders bevorzugt sind (Fluoralkyl)fluorphosphate (IId), bei denen z = 0, x = 3 und 1 ≤ y ≤ 4, konkret [PF₃(CF₃)₃]⁻, [PF₃(C₂F₅)₃]⁻, [PF₃(C₃F₇)₃]⁻ und [PF₃(C₄F₇)₃]⁻.

Handelt es sich bei dem Anion Aⁿ⁻ um ein Imid (IIe) [R^{g}-SO₂-N-SO₂-R^{h}]⁻, (IIf) [Rⁱ-SO₂-N-CO-R^{j}]⁻ oder (IIg) [R^{k}-CO-N-CO-R^{l}]⁻, so stehen die Reste R^{g} bis R^{l} unabhängig voneinander bevorzugt für Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Imide (IIe), (IIf) und (IIg) sind [F₃C-SO₂-N-SO₂-CF₃]⁻ (Bis(trifluoromethylsulfonyl)imid), [F₅C₂-SO₂-N-SO₂-C₂F₅]⁻ (Bis(pentafluoroethylsulfonyl)imid), [F₃C-SO₂-N-CO-CF₃]⁻, [F₃C-CO-N-CO-CF₃]⁻ und jene, in denen die Reste R^{g} bis R^{l} unabhängig voneinander für Methyl, Ethyl, Propyl, Butyl, Phenyl, Trichlormethyl, Dichlormethyl, Chlormethyl, Trifluormethyl, Difluormethyl oder Fluormethyl stehen.
Handelt es sich bei dem Anion Aⁿ⁻ um ein Methid (IIh)

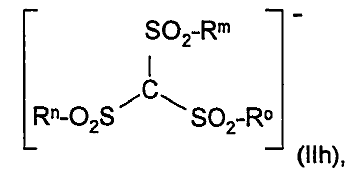

so stehen die Reste R^{m} bis R^{o} unabhängig voneinander bevorzugt für Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Methide (IIh) sind [(F₃C-SO₂)₃C]⁻ (Tris(trifluoromethylsulfonyl)methid), [(F₅C₂-SO₂)₃C]⁻ (Bis(pentafluoroethylsulfonyl)methid) und jene, in denen die Reste R^{m} bis R^{o} unabhängig voneinander für Methyl, Ethyl, Propyl, Butyl, Phenyl, Trichlormethyl, Dichlormethyl, Chlormethyl, Trifluormethyl, Difluormethyl oder Fluormethyl stehen.

Handelt es sich bei dem Anion Aⁿ⁻ um ein organisches Sulfat (IIi) [R^{p}O-SO₃]⁻, so steht der Rest R^{p} bevorzugt für einen verzweigten oder unverzweigten C₁- bis C₃₀-Alklylrest und besonders bevorzugt für Methylsulfat, Ethylsulfat, Propylsulfat, Butylsulfat, Pentylsulfat, Hexylsulfat, Heptylsulfat oder Octylsulfat.

Ganz besonders bevorzugte Anionen Aⁿ⁻ sind: Tetrafluoroborat, Hexafluorophosphat, Trifluormethansulfonat, Methansulfonat, Formiat, Acetat, Mandelat, Nitrat, Nitrit, Trifluoracetat, Sulfat, Hydrogensulfat, Methylsulfat, Ethylsulfat, Propylsulfat, Butylsulfat, Pentylsulfat, Hexylsulfat, Heptylsulfat, Octylsulfat, Phosphat, Dihydrogenphosphat, Hydrogenphosphat, Propionat, Bis(trifluoromethylsulfonyl)imid (Triflimid), Bis(pentafluoroethylsulfonyl)imid, Tris(trifluoro-methylsulfonyl)methid (Methid), Bis(pentafluoroethylsulfonyl)methid, p-Tolylsulfonat (Tosylat), Bis[salicylato(2-)]borat, Dimethylenglykolmonomethylethersulfat, Oleat, Stearat, Acrylat, Methacrylat, Maleinat, Hydrogencitrat, Vinyl-phosphonat, Bis(pentafluoroethyl)phosphinat, Bis[oxalato(2-)]borat, Bis[1,2-benzoldiolato(2-)-O,O']borat, Dicyanamid, Tris(pentafluoroethyl)trifluorophosphat, Tris(heptafluoropropyl)trifluorophosphat oder Tetracyanoborat.

Unter der zu extrahierenden organische Verbindung mit protisch, funktionellen Gruppen sind im allgemeinen Verbindungen bzw. Verbindungsklassen der allgemeinen Formel E-X-H zu verstehen,
wobei
- E: Wasserstoff, für ggf. durch Halogen, C₁-C₄-Alkoxy, Amino substituiertes C₁-C₂₀-Alkyl; ggf. durch Halogen, Alkyl, Methoxy, substituiertes Phenyl, Naphthyl oder Heteroaryl steht und
- X: -N(R')-, -O-, -P(R')-, -N(R')-O-, -N(R')-N(R")-, -C(R')=N-O-, -C(=O)-O-, -S(=O)₂-O-, -S(=O)-O-. P (R')-, P (=O)(R')-, P (=O)(OR')-, P (=O)₂(R')-

Im einzelnen lassen sich mit dem erfindungsgemäßen Verfahren folgende organische Verbindungen mit protisch, funktionellen Gruppen extrahieren:
Alkohole wie C₁-C₂₀-Alkanole, Polyole, geminale Diole (Hydrate); Silanole;
Amine wie beispielsweise Anilin, N-C₁-C₂₀-Alkylanilin, N-C₁-C₂₀-Alkylamin, N,N-Di-C₁-C₂₀-Alkylamin, cycl. Amine wie Piperidin, Piperazin, Pyrolidin, Morpholin und Ammoniumsalze; Phosphine; Amidine; Hydrazine und Hydraziniumsalze, Hydrazone; Hydroxylamine und Hydroxylammoniumsalze; Carbamate; Harnstoffe; Cyanhydrine;lmine wie z.B. Imidazol, Aldimine (Schiffsche Basen), Ketimine und Iminiumsalze; Enamine wie z.B. Pyrrol;
Hydrazoverbindungen; Hydroperoxide wie z.B. tert-Butylhydroperoxid; Imide wie z.B. Phthalimid; Iminoester; Oxime; Wasserstoffperoxid;
Phenole wie Hydrochinone, Resorcine, Brenzkatechine, Naphthol, Binaphthol; Phosphinige Säuren; Phosphinsäuren; Phosphonsäuren; Phosphonsäuremonoalkyl (oder aryl) ester; Phosphorsäuren; Phosphorsäuremonoalkyl (oder aryl) ester; Phosphorsäuredialkyl (oder aryl) ester; Carbonsäuren; Aminosäuren; Hydroxycarbonsäuren; Ketocarbonsäuren; Hydroxamsäuren; Hydroxamsulfonsäuren; Sulfinsäuren; Sulfonsäuren oder Peroxycarbonsäuren.

Insbesondere bedeutet E-X-H: ggf. subst. Phenol, wie beispielsweise o,m,p-Kresol, 3-Hydroxypyrazol, 2-Hydroxypyridin, Hydrochinon, Resorcin, Brenzkatechin; C₁-C₂₀-Alkohol, Glykol, Glycerin, ggf. subst Anilin, wie beispielsweise N-C₁-C₂₀-Alkylanilin, N-C₁-C₂₀-Alkylamin, N,N-Di-C₁-C₂₀-Alkylamin, P-C₁-C₂₀-Alkylphosphin, P,P-Di-C₁-C₂₀-Alkylphosphin, Phenylphosphin, Diphenyl-phosphin, Hydrazin, Hydroxylamin, Sulfonsäure, Sulfinsäure, Phosphorsäure, Carbonsäure oder Aminosäure.

Insbesondere bevorzugt bedeutet E-X-H:, ggf. subst. Phenol, wie beispielsweise o,m,p-Kresol, 3-Hydroxypyrazol, 2-Hydroxypyridin, Hydrochinon, Resorcin, Brenzkatechin oder Alkohole wie, C₁-C₂₀-Alkohol, Glykol, Glycerin.

Unter aprotischen Lösungsmitteln versteht man insbesondere neben den weiter unten definierten Kohlenwasserstoffen:
- chlorierte Alkane wie Methylenchlorid, Chloroform oder Tetrachlorkohlenstoff;
- aliphatische und alicyclische Ether wie Diethylether, Methyltert.butylether oder Tetrahydrofuran;
- Ketone wie Aceton, 2-Butanon oder 3-Butanon;
- Carbonsäureester wie Essigsäureethylester, Acetessigsäureethylester, Essigsäurebutylester oder Essigsäure-2-ethylhexylester und
- Amide wie N-Methylpyrrolidon, Dimethylformamid, Tetramethylharnstoff oder Hexamethylphosphorsäuretriamid.

Unter Kohlenwasserstoff sind aliphatische Verbindungen wie Alkane zu verstehen. Bevorzugte Alkane sind verzweigtes oder unverzweigtes Propan, Butan, Pentan, Hexan, Heptan, Octan, Nonan oder Decan oder Alkangemische, die als Lösungsmittel üblicherweise eingesetzt werden sowie Cycloalkane wie Cyclopentan oder Cyclohexan. In Frage kommen hier verschiedene Leichtbenzine aus Erdölfraktionen wie z.B. Solvesso®.

Auch sind Olefine wie Ethylen, Propen, Buten, Butadiene, Cyclohexadien, Cyclohexen, Hexadien, Hexen oder Penten als Kohlenwasserstoff geeignet.

Weiterhin sind unter Kohlenwasserstoff aromatische Lösungsmittel wie Benzol, Toluol, o,m,p-Xylol, Mesitylen, Cumol, Pseudocumol, Hemellitol, Ethylbenzol, Anisol, Styrol, Stilben, tert.-Butylbenzol, Dinitrobenzol, Chlorbenzol, Dichlorbenzol, Nitrobenzol oder Benzonitril zu verstehen. Besonders bevorzugt werden Toluol und insbesondere Chlorbenzol eingesetzt.

Auch können Kohlenwasserstoffgemische aus verschiedenen Alkanen, Olefinen, Aromaten oder aber Gemische aus Alkanen und Olefinen, Alkanen und Aromaten oder Olefinen und Aromaten zum Einsatz gelangen.

Folgende Verunreinigung lassen sich erfindungsgemäß vorteilhaft aus aliphatischen Kohlenwasserstoffen mit Hilfe ionischer Flüssigkeiten extrahieren: Alkohole wie C₁-C₂₀-Alkanole, Polyole, geminale Diole (Hydrate); Amine wie beispielsweise Anilin, N-C₁-C₂₀-Alkylanilin, N-C₁-C₂₀-Alkylamin, N,N-Di-C₁-C₂₀-Alkylamin, cycl. Amine wie Piperidin, Piperazin, Pyrolidin, Morpholin und Ammoniumsalze; Phosphine; Amidine; Hydrazine und Hydraziniumsalze, Hydrazone; Hydroxylamine und Hydroxylammoniumsalze; Carbamate; Harnstoffe; Imine wie z.B. Imidazol, Aldimine (Schiffsche Basen), Ketimine und Iminiumsalze; Hydroperoxide wie z.B. tert-Butylhydroperoxid; Imide wie z.B. Phthalimid; Oxime; Wasserstoffperoxid;
Phenole wie Hydrochinone, Resorcine, Brenzkatechine, Naphthol, Binaphthol; Phosphinige Säuren; Phosphinsäuren; Phosphonsäuren; Phosphonsäuremonoalkyl (oder aryl) ester; Phosphorsäuren; Phosphorsäuremonoalkyl (oder aryl) ester; Phosphorsäuredialkyl (oder aryl) ester; Carbonsäuren; Aminosäuren; Hydroxycarbonsäuren; Ketocarbonsäuren; Hydroxamsäuren; Hydroxamsulfonsäuren; Sulfinsäuren; Sulfonsäuren oder Peroxycarbonsäuren.

Besonders bevorzugt werden die folgenden Verunreinigungen aus aliphatischen Kohlenwasserstoffen extrahiert:Alkohole, Diole, Polyole; Amine; Phosphine; Imine; Aldimine, Ketimine; Harnstoffe; Hydrazine; Hydroperoxide; Hydroxylamine; Imide; Oxime; Phenole, Hydrochinone, Resorcine, Brenzkatechine, Naphthol, Binaphthol; Peroxycarbonsäuren; Carbonsäuren; Aminosäuren; Phosphinige Säuren, Phosphinsäuren, Phosphonsäuren, Phosphonsäuremonoalkyl (oder aryl) ester, Sulfinsäuren, Sulfonsäuren.

Aus aromatischen Kohlenwasserstoffen können mit dem erfindungsgemäßen Verfahren insbesondere folgende protische Verbindungen extrahiert werden.

Alkohole wie C₁-C₂₀-Alkanole, Polyole; Amine wie beispielsweise Anilin, N-C₁-C₂₀-Alkylanilin, N-C₁-C₂₀-Alkylamin, N,N-Di-C₁-C₂₀-Alkylamin, cycl. Amine wie Piperidin, Piperazin, Pyrolidin, Morpholin und Ammoniumsalze; Phosphine; Amidine; Hydrazine und Hydraziniumsalze, Hydrazone; Hydroxylamine und Hydroxylammoniumsalze; Carbamate; Harnstoffe; Imine wie z.B. Imidazol, Aldimine (Schiffsche Basen), Ketimine und Iminiumsalze; Hydroperoxide wie z.B. tert-Butylhydroperoxid; Imide wie z.B. Phthalimid; Oxime; Wasserstoffperoxid;
Phenole wie Hydrochinone, Resorcine, Brenzkatechine, Naphthol, Binaphthol; Phosphinige Säuren; Phosphinsäuren; Phosphonsäuren; Phosphonsäuremonoalkyl (oder aryl) ester; Phosphorsäuren; Phosphorsäuremonoalkyl (oder aryl) ester; Phosphorsäuredialkyl (oder aryl) ester; Carbonsäuren; Aminosäuren; Hydroxycarbonsäuren; Ketocarbonsäuren; Hydroxamsäuren; Hydroxamsulfonsäuren; Sulfinsäuren; Sulfonsäuren oder Peroxycarbonsäuren.

Besonders bevorzugt werden die folgenden Verunreinigungen aus aromatischen Kohlenwasserstoffen extrahiert: Alkohole, Diole, Polyole; Amine; Phosphine; Imine; Aldimine, Ketimine; Harnstoffe; Carbamate, Hydrazine; Hydroperoxide; Hydroxylamine; Imide; Oxime; Phenole, Hydrochinone, Resorcine, Brenzkatechine, Naphthol, Binaphthol; Peroxycarbonsäuren; Carbonsäuren; Aminosäuren; Phosphinige Säuren, Phosphinsäuren, Phosphonsäuren, Phosphonsäuremonoalkyl (oder aryl) ester, Sulfinsäuren, Sulfonsäuren.

Bei den in den vorstehenden Formeln angegebenen Definitionen der Symbole wurden Sammelbegriffe verwendet, die allgemein repräsentativ für die folgenden Substituenten stehen:
**Halogen:** Fluor, Chlor, Brom und Jod;
**Alkyl:** gesättigte, geradkettige oder verzweigte Kohlenwasserstoffreste mit 1 bis 4 oder 6, 12, 20 Kohlenstoffatomen, z.B. C₁-C₆-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;
**Halogenalkyl:** geradkettige oder verzweigte Alkylgruppen mit 1 bis 12 Kohlenstoffatomen (wie vorstehend genannt), wobei in diesen Gruppen teilweise oder vollständig die Wasserstoffatome durch Halogenatome wie vorstehend genannt ersetzt sein können, z.B. C₁-C₂-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl oder 1,1,1-Trifluorprop-2-yl;
fünf- bis sechsgliedriger gesättigter, partiell ungesättigter oder aromatischer Heterocyclus, enthaltend ein bis vier Heteroatome aus der Gruppe O, N oder S:
   - **5- oder 6-gliedriges Heterocyclyl,** enthaltend ein bis drei Stickstoffatome und/oder ein Sauerstoff- oder Schwefelatom oder ein oder zwei Sauerstoff- und/oder Schwefelatome, z.B. 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl, 1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl, 2,4-Dihydrothien-3-yl, 2-Pyrrolin-2-yl, 2-Pyrrolin-3-yl, 3-Pyrrolin-2-yl, 3-Pyrrolin-3-yl, 2-Isoxazolin-3-yl, 3-Isoxazolin-3-yl, 4-Isoxazolin-3-yl, 2-Isoxazolin-4-yl, 3-Isoxazolin-4-yl, 4-Isoxazolin-4-yl, 2-Isoxazolin-5-yl, 3-Isoxazolin-5-yl, 4-Isoxazolin-5-yl, 2-Isothiazolin-3-yl, 3-Isothiazolin-3-yl, 4-Isothiazolin-3-yl, 2-Isothiazolin-4-yl, 3-Isothiazolin-4-yl, 4-Isothiazolin-4-yl, 2-Isothiazolin-5-yl, 3-Isothiazolin-5-yl, 4-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl, 3,4-Dihydropyrazol-1-yl, 3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Hexahydropyridazinyl, 4-Hexahydropyridazinyl, 2-Hexahydropyrimidinyl, 4-Hexahydropyrimidinyl, 5-Hexahydropyrimidinyl, 2-Piperazinyl, 1,3,5-Hexahydro-triazin-2-yl und 1,2,4-Hexahydrotriazin-3-yl;
   - **5-gliedriges Heteroaryl,** enthaltend ein bis vier Stickstoffatome oder ein bis drei Stickstoffatome und ein Schwefel- oder Sauerstoffatom: 5-Ring Heteroarylgruppen, welche neben Kohlenstoffatomen ein bis vier Stickstoffatome oder ein bis drei Stickstoffatome und ein Schwefel- oder Sauerstoffatom als Ringglieder enthalten können, z.B. 2-Furyl, 3-Furyl, 2-Thienyl, 3-Thienyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,4-Triazol-3-yl, 1,3,4-Oxadiazol-2-yl, 1,3,4-Thiadiazol-2-yl und 1,3,4-Triazol-2-yl;
   - **6-gliedriges Heteroaryl,** enthaltend ein bis drei bzw. ein bis vier Stickstoffatome: 6-Ring Heteroarylgruppen, welche neben Kohlenstoffatomen ein bis drei bzw. ein bis vier Stickstoffatome als Ringglieder enthalten können, z.B. 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl;

Die ionische Flüssigkeit wird im allgemeinen so gewählt, dass sie bei Raumtemperatur weniger als 10% und vorzugsweise weniger als 5% mischbar mit dem Kohlenwasserstoff ist. Geeignet sind in der Regel ionische Flüssigkeiten, die mit dem Kohlenwasserstoff zwei getrennte Phasen bilden.

Im allgemeinen lässt sich mit dem erfindungsgemäßen Verfahren die Verunreinigung in einem Extraktionsschritt um mindestens 5%, häufig um mehr als 50% und vorzugsweise um mehr als 90% reduzieren. Das Extaktionsverfahren kann üblicherweise einstufig oder auch mehrstufig, in einer Batch-Fahrweise oder auch kontinuierlich durchgeführt werden. Wahlweise wird das Extraktionsverfahren unter Inertgasatmosphäre (Stickstoff, Edelgase, Kohlendioxid) durchgeführt.

Übliche Extraktionszeiten belaufen sich auf unter einer Minute bis zu 2 Stunden. Bevorzugt sind Kontaktzeiten der beiden Phasen von weniger als einer Stunde.

In Abhängigkeit des Schmelzpunktes der ionischen Flüssigkeit werden Temperaturen von kleiner/gleich 100°C eingestellt. Typische Extraktionstemperaturen sind 10 bis 100°C, bevorzugt 25 bis 80°C.

Die Extraktion kann drucklos oder unter einem Druck von bis zu 200 atm durchgeführt werden.

Übliche Extraktionsapparate sind ein Mixer-Settler-system, Kolonnen unterschiedlichster Bauart wie Boden-, Blasensäule, Packungs-, Füllkörper-, Roting Disc-, Schwingplattenkolonne oder ein sog. Tellerabscheider.

Nach erfolgter Extraktion kann die Phasentrennung nach literaturüblichen Methoden durchgeführt werden.

### Rückführung der ionischen Flüssigkeit

Ionische Flüssigkeiten haben einen geringen Dampfdruck und sind sehr temperaturstabil. Die Rückführung der ionischen Flüssigkeiten erfolgt vorzugsweise durch destillative Abtrennung oder Reextraktion der Verunreinigung.

Die destillative Abtrennung der Verunreinigung erfolgt vorzugsweise in einem Dünnschichtverdampfer. Für die Reextraktion eignen sich insbesondere Medien, die ebenfalls eine Mischungslücke mit der ionischen Flüssigkeit besitzen. Geeignete Medien für die Re-extraktion sind beispielsweise polare Kohlenwasserstoffe wie halogenierte Kohlenwasserstoffe, superkritisches Kohlendioxid, Ketone, Ester, Nitrile, Harnstoffe, Ether, Polyether oder Polyole.

Im weiteren soll an einem Ausführungsbeispiel die Funktionsweise des Verfahrens näher erläutert werden. Das dort zugrunde liegende Trennproblem stellt sich wie folgt dar. Bei der Spaltung von Kresoxim-Methyl mit Eisen(III)chlorid in Chlorbenzol fällt neben dem gewünschten 2-Chlormethylphenylessig-säure-α-O-methyloxim (CIMO) zwangsweise äquimolare Mengen an *o*-Kresol an.

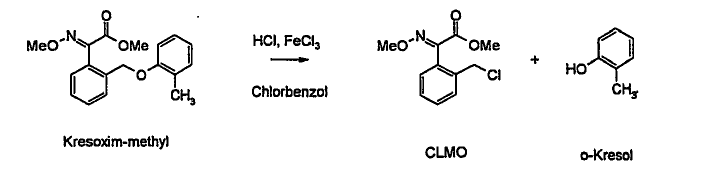

Ber der herkömmlichen Abtrennung von Kresol mittels Laugen - wie verdünnter wässriger Natronlauge - wird das unter alkalischen Bedingungen empfindliche CIMO teilweise zersetzt.

Daher wurde geprüft, ob die Extraktion mit sauren ionischen Flüssigkeiten möglich ist. Im nicht-wässrigen, sauren Milieu ist CIMO stabil. Der folgende Versuch zeigt, daß die saure ionische Flüssigkeit 1-Ethyl-3-methylimidazolium Hydrogensulfat (EMIM HSO4) als Extraktionsmittel ausgezeichnete Selektivitäten bezüglich o-Kresol aufweist. Bereits nach einmaliger Extraktion kann o-Kresol It. HPLC vollständig entfernt werden. Die Wiederfindung von CIMO nach Extraktion beträgt 98%.

### Beispiel 1 (Extraktion von o-Kresol aus Chlorbenzol mit Hilfe von EMIM HSO₄)

Die Extraktion wurde bei bei 80°C durchgeführt, um die Viskosität der Ionischen Flüssigkeit zu verringern. Die Extraktionsdauer betrug jeweils 15 Minuten. Zur optimalen Auftrennung der Phasen wurde vor der Separation zentrifugiert. Die Phasengrenze ließ sich sehr gut erkennen, und die Auftrennung der Phasen war vollständig. Das zur Extraktion eingesetzte EMIM HSO₄ war mit dem Lösemittel (Chlorbenzol) vorgesättigt.

| **Medium** | **Menge g** | **Gew% o-Kresol** | **g o-Kresol** | **Summe g E/Z-Oxim** |
|---|---|---|---|---|
| Ionische Flüssigkeit zugesetzt | 80 | 0 | 0 | 0 |
| org. Phase Einsatzmaterial | 80 | 2,11 | 1,688 | 4,312 |
| Oberphase nach 1.Waschung | 72,5 | 0 | 0 | 4,176 |
| Unterphase nach 1. Waschung | 81,8 | 1,75 | 1,4315 | 0,01636 |
| Oberphase eingesetzt in 2. Extraktion | 69 | 0 | 0 | 3,9744 |
| Oberphase nach 2. Waschung | 64 | 0 | 0 | 3,7184 |
| Unterphase nach 2. Waschung | 73,5 | 0 | 0 | 0 |

| Mengenbilanz: | |
|---|---|
| *In 1. Extraktion eingesetzt:* | *160,0 g (gesamt)* |
| Nach 1. Extraktion erhalten: | 154,3 g |
| Verluste (Verdunsten, Kolben): | 5,7 g (3,6%) |
| | |
| In 1. Extraktion eingesetzt: | 80,0 g (Oberphase) |
| Nach 1. Extraktion erhalten: | 72,5 g |
| Nach 1. Extraktion erhalten (theoretisch): | 78,4 g |
| Verluste (Verdunsten, Kolben): | 1,6 g (2,0%) |
| | |
| In 2. Extraktion eingesetzt: | 146,5 g (gesamt) |
| Nach 2. Extraktion erhalten: | 137,5 g |
| Verluste (Verdunsten, Kolben): | 9,0 g (6,1%) |
| In 2. Extraktion eingesetzt: | 69,0 g (Oberphase) |
| Nach 2. Extraktion erhalten: | 64,0 g |
| Nach 2. Extraktion erhalten (theoretisch): | 68,9 g |
| Verluste (Verdunsten, Kolben): | 4,9 g (7,1 %) |

*o*-Kresol läßt sich dabei in der organischen Phase mit einem Extraktionsschritt it. HPLC vollständig entfernen. Eine exaktere Analytik per GC zeigte, daß *o*-Kresol nach zwei Extraktionen auf < 50 ppm abgereichert werden kann. CLMO ist gegenüber der ionischen Flüssigkeit auch bei 80°C stabil.

## Patentansprüche

1. Verfahren zur extraktiven Entfernung von ggf. subst. Phenol, 3-Hydroxypyrazol, 2-Hydroxypyridin, Hydrochinon, Resorcin, Brenzkatechin; C₁-C₂₀-Alkohol, Glykol, Glycerin, ggf. subst. Anilin, N-C₁-C₂₀-Alkylamin, N,N-Di-C₁-C₂₀-Alkylamin, P-C₁-C₂₀-Alkylphosphin, P,P-Di-C₁-C₂₀-Alkylphosphin, Phenylphosphin, Diphenyl-phosphin, Hydrazin, Hydroxylamin, Sulfonsäure, Sulfinsäure, Phosphorsäure, Carbonsäure oder Aminosäure aus apotischen Lösungsmitteln mit Hilfe von ionischen Flüssigkeiten der Formel [K]ₙ⁺[A]ⁿ⁻,
wobei
n 1, 2 oder 3 ist;
[K]+ ausgewählt ist aus der Gruppe bestehend aus:
• quartären Ammonium-Kationen der allgemeinen Formel [NR¹, R²,R³,R⁴]⁺ (Ia),
• quartären Phosphonium-Kationen der allgemeinen Formel [PR¹, R²,R³,R⁴]⁺ (Ib),
in denen
R¹, R², R³, R⁴ C₁-C₁₂-Alkyl oder Phenyl-C₁-C₄-alkyl bedeuten, wobei die alphatischen Reste 1 bis 4 Substituenten ausgewählt aus der Gruppe Halogen, Amino, Cyan, C1-C4-Alkoxy tragen können und der Phenylring die zuvorgenannten Substituenten und zusätzlich C1-C6-alkyl, Carboxylat- und Sulfonatgruppierungen tragen kann;
R¹ und R² zusammen für einen C₄-C₅-Alkenylenrest, der durch C₁-C₄-Alkyl, Halogen, Cyan oder C₁-C₄-Alkoxy substituiert sein kann, stehen können;
• Imidazolium-Kationen der allgemeinen Formel, 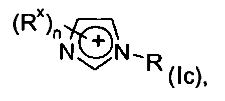
• Pyridinium-Kationen der allgemeinen Formel, 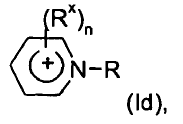
• Pyrazolium-Kationen der allgemeinen Formel, 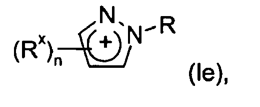
• Chinolinium-Kationen der allgemeinen Formel, 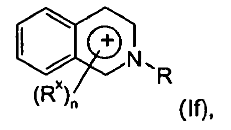
• Thiazolium-Kationen der allgemeinen Formel, 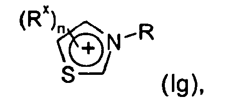
• Triazinium-Kationen der allgemeinen Formel, 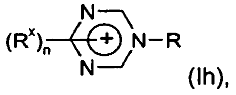 in denen der Index n und die Substituenten R und R^{x} die folgende Bedeutung haben:
n 0, 1, 2, 3 oder 4;
R Wasserstoff, C₁-C₁₂-Alkyl oder Phenyl-C₁-C₄-alkyl,
wobei die alphatischen Reste 1 bis 4 Substituenten ausgewählt aus der Gruppe Halogen, Amino, Cyan, C1-C4-Alkoxy tragen können und der Phenylring die zuvorgenannten Substituenten und zusätzlich C1-C6-alkyl, Carboxylat- und Sulfonatgruppierungen tragen kann;
R^{x} C₁-C₆-Alkyl, Halogen, Amino, Cyan, C₁-C₄-Alkoxy, Carboxylat oder Sulfonat;
[A]ⁿ⁻ für das teil- oder volldeprotonierte Anion einer anorganischen oder organischen Protonensäure HₙA (III) steht, wobei n eine ganze, positive Zahl ist und den Ladungszustand des Anions wiedergibt,

2. Verfahren nach Anspruch 1, wobei die zu extrahierende organische Verbindung ein Phenol oder Alkohol ist.

3. Verfahren nach Anspruch 1 oder 2, wobei das aprotische Lösungsmittel ein Kohlenwasserstoff ist.

4. Verfahren nach Anspruch 1 bis 3, wobei der Kohlenwasserstoff ein Alkan oder halogeniertes Alkan ist.

5. Verfahren nach Anspruch 1 bis 3, wobei der Kohlenwasserstoff ein Aren ist, das gegebenenfalls durch Halogen, Nitro, Cyano, C₁-C₃-Alkyl, C₁-C₃-Alkoxy oder Methoxycarbonyl substituiert ist.

6. Verfahren nach Anspruch 1 bis 5, wobei die ionische Flüssigkeit ein Ammonium- oder Imidazoliumsalz oder ein Gemisch aus diesen Salzen ist.

7. Verfahren nach Anspruch 1 bis 6, wobei die ionische Flüssigkeit ein Sulfat oder Hydrogensulfat ist.

8. Verfahren nach Anspruch 1, 6 oder 7, wobei ein Phenol aus Chlorbenzol entfernt wird.

9. Verfahren nach Anspruch 1 bis 8, wobei die Abtrennung der extrahierten Verunreinigung aus der ionischen Flüssigkeit auf destillativem Weg erfolgt.

10. Verfahren nach Anspruch 1 bis 8, wobei die Abtrennung der extrahierten Verunreinigung aus der ionischen Flüssigkeit durch Re-extraktion erfolgt.

## Claims

1. A process for the extractive removal of optionally substituted phenol, 3-hydroxypyrazole, 2-hydroxypyridine, hydroquinone, resorcinol, catechol; C₁-C₂₀-alcohol, glycol, glycerol, optionally substituted aniline, N-C₁-C₂₀-alkylamine, N,N-di-C₁-C₂₀-alkylamine, P-C₁-C₂₀-alkylphosphine, P, P-di-C₁-C₂₀-alkylphosphine, phenylphosphine, diphenylphosphine, hydrazine, hydroxylamine, sulfonic acid, sulfinic acid, phosphoric acid, carboxylic acid or amino acid from aprotic solvents by means of ionic liquids of the formula [K]ₙ⁺[A]ⁿ⁻,
where
n is 1, 2 or 3;
[K]+ is selected from the group consisting of:
• quaternary ammonium cations of the formula [NR¹,R²,R³,R⁴]⁺ (Ia),
• quaternary phosphonium cations of the formula [PR¹,R²,R³,R⁴]⁺ (Ib),
where
R¹, R², R³, R⁴ are each C₁-C₁₂-alkyl or phenyl-C₁-C₄-alkyl, where the aliphatic radicals may bear from 1 to 4 substituents selected from the group consisting of halogen, amino, cyano, C₁-C₄-alkoxy and the phenyl ring may bear the abovementioned substituents and also C₁-C₆-alkyl, carboxylate and sulfonate groups;
R¹ and R² may together form a C₄-C₅-alkenylene radical which may be substituted by C₁-C₄-alkyl, halogen, cyano or C₁-C₄-alkoxy;
• imidazolium cations of the formula, 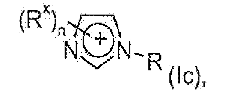
• pyridinium cations of the formula, 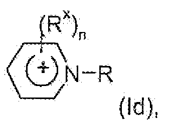
• pyrazolium cations of the formula, 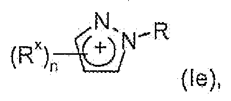
• quinolinium cations of the formula, 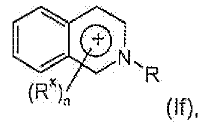
• thiazolium cations of the formula, 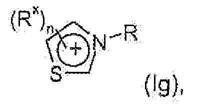
• triazinium cations of the formula, 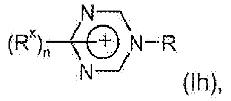
where the index n and the substituents R and R^{x} have the following meanings :
n is 0,1,2,3 or 4;
R is hydrogen, C₁-C₁₂-alkyl or phenyl-C₁-C₄-alkyl,
where the aliphatic radicals may bear from 1 to 4 substituents selected from the group consisting of halogen, amino, cyano, C₁-C₄-alkoxy and the phenyl ring may bear the abovementioned substituents and also C₁-C₆-alkyl, carboxylate and sulfonate groups;
R^{x} is C₁-C₆-alkyl, halogen, amino, cyano, C₁-C₄-alkoxy, carboxylate or sulfonate;
[A]ⁿ⁻ is the partly or fully deprotonated anion of an inorganic or organic protic acid HₙA (III), where n is a positive integer and indicates the charge on the anion.

2. The process according to claim 1, wherein the organic compound to be extracted is a phenol or alcohol.

3. The process according to claim 1 or 2, wherein the aprotic solvent is a hydrocarbon.

4. The process according to any of claims 1 to 3, wherein the hydrocarbon is an alkane or halogenated alkane.

5. The process according to any of claims 1 to 3, wherein the hydrocarbon is an arene which is optionally substituted by halogen, nitro, cyano, C₁-C₃-alkyl, C₁-C₃-alkoxy or methoxycarbonyl.

6. The process according to any of claims 1 to 5, wherein the ionic liquid is an ammonium or imidazolium salt or a mixture of these salts.

7. The process according to any of claims 1 to 6, wherein the ionic liquid is a sulfate or hydrogensulfate.

8. The process according to claim 1, 6 or 7, wherein a phenol is removed from chlorobenzene.

9. The process according to any of claims 1 to 8, wherein the extracted impurity is separated off from the ionic liquid by distillation,

10. The process according to any of claims 1 to 8, wherein the extracted impurity is separated off from the ionic liquid by reextraction.

## Revendications

1. Procédé d'élimination par extraction de phénol, 3-hydroxypyrazole, 2-hydroxypyridine, hydroquinone, résorcine, pyrocatéchine le cas échéant substitués, d'alcools en C₁ à C₂₀, de glycol, de glycérol, d'aniline éventuellement substituée, de N-(C₁-C₂₀)alkylamines, de N,N-di-(C₁-C₂₀)alkylamines, de P-(C₁-C₂₀)alkylphosphine, de P,P-di-(C₁-C₂₀)alkylphosphine, de phénylphosphine, de diphénylphosphine, d'hydrazine, d'hydroxylamine, d'acide sulfonique, d'acide sulfinique, d'acide phosphorique, d'acide carboxylique ou d'acide aminé à partir de solvants aprotiques à l'aide de liquides ioniques de la formule [K]ₙ⁺[A]ⁿ⁻,
où
n vaut 1, 2 ou 3
[K]⁺ est choisi dans le groupe formé par :
• des cations ammonium quaternaire de la formule générale [NR¹,R²,R³,R⁴]⁺ (Ia)
• des cations phosphonium quaternaire de la formule générale [PR¹,R²,R³,R⁴]⁺ (Ib),
dans lesquelles
R¹, R², R³, R⁴ représentant un groupe alkyle en C₁ à C₁₂ ou phényl(C₁-C₄)alkyle, où les radicaux aliphatiques peuvent porter de 1 à 4 substituants choisis dans le groupe formé par l'halogène et des groupes amino, cyano, alcoxy en C₁ à C₄ et le noyau phényle peut porter les substituants précités et en outre des groupements alkyle en C₁ à C₆, carboxylate et sulfonate,
R¹ et R² peuvent représenter ensemble un radical alcényle en C₄ à C₅, qui peut être substitué par un groupe alkyle en C₁ à C₄, de l'halogène, un groupe cyano ou alcoxy en C₁ à C₄,
• des cations imidazolium de la formule générale 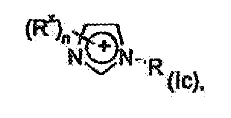
• des cations pyridinium de la formule générale 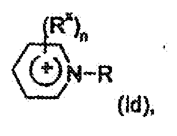
• des cations pyrazolium de la formule générale 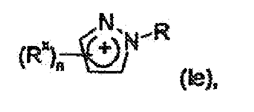
• des cations quinolinium de la formule générale 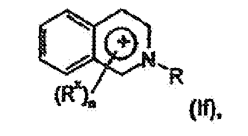
• des cations thiazolium de la formule générale 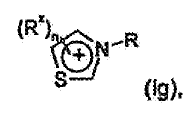
• des cations triazinium de la formule générale 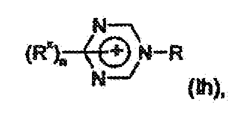
dans lesquelles l'indice n et les substituants R et R^{x} ont la signification suivante :
n vaut 0, 1, 2, 3 ou 4,
R est de l'hydrogène ou un groupe alkyle en C₁ à C₁₂ ou phényl(C₁-C₄)alkyle, où les radicaux aliphatiques peuvent porter de 1 à 4 substituants choisis dans le groupe formé par l'halogène et des groupes amino, cyano, alcoxy en C₁ à C₄ et le noyau phényle peut porter les substituants précités et en outre des groupements alkyle en C₁ à C₆, carboxylate et sulfonate,
R^{x} est un groupe alkyle en C₁ à C₆, halogène, amino, cyano, alcoxy en C₁ à C₄, carboxylate ou sulfonate,
[A]ⁿ⁻ représente l'anion partiellement ou totalement déprotoné d'un acide protonique inorganique ou organique HₙA (III), où n est un nombre entier positif et reproduit l'état de charge de l'anion.

2. Procédé suivant la revendication 1, dans lequel le composé organique à extraire est un phénol ou un alcool.

3. Procédé suivant la revendication 1 ou 2, dans Lequel le solvant aprotique est un hydrocarbure.

4. Procédé suivant les revendications 1 à 3, dans lequel l'hydrocarbure est un alcane ou un alcane halogéné.

5. Procédé suivant les revendications 1 à 3, dans lequel l'hydrocarbure est un arène qui est éventuellement substitué par de l'halogène ou un groupe nitro, cyano, alkyle en C₁ à C₃, alcoxy en C₁ à C₃ ou méthoxycarbonyle.

6. Procédé suivant les revendications 1 à 5, dans lequel le liquide ionique est un sel d'ammonium ou d'imidazolium ou un mélange de ces sels.

7. Procédé suivant les revendications 1 à 6, dans lequel le liquide ionique est un sulfate ou un hydrogénosulfate.

8. Procédé suivant la revendication 1, 6 ou 7, dans lequel un phénol est éliminé du chlorobenzène.

9. Procédé suivant les revendications 1 à 8, dans lequel la séparation de l'impureté extraite du liquide ionique est entreprise par distillation.

10. Procédé suivant les revendications 1 à 8, dans lequel la séparation de l'impureté extraite du liquide ionique est entreprise par réextraction.
